# EUROPEAN PATENT APPLICATION

(11) **EP 4 134 285 A1**
(43) Date of publication of application: **15.02.2023**
(21) Application number: 21921625.6
(22) Date of filing: 01.09.2021
(51) Int. Cl.: B60W 30/09, B60W 40/02, B60W 50/00

(54) **VEHICLE OBSTACLE AVOIDANCE METHOD AND APPARATUS, ELECTRONIC DEVICE, AND STORAGE MEDIUM**

(30) Priority: 08.06.2021 CN 202110638411
(71) Applicant: NEOLIX TECHNOLOGIES CO., LTD., Beijing 100176 (CN)
(72) Inventor: LIU, Bing, Beijing 100176 (CN)
(74) Representative: Bryn Aarflot AS
(86) International application number: PCT/CN2021/115975
(87) International publication number: WO 2022/257283

(57) **Abstract**

The present disclosure relates to the technical field of unmanned driving, and provides an obstacle avoidance method, an obstacle avoidance apparatus, an electronic device and a storage medium for a vehicle. The method is applied to an unmanned device, i.e., an automatic driving device or a driverless vehicle, and comprises: performing collision detection on obstacles on a driving path of the vehicle, and executing a first feedback process when the result of the collision detection is that a collision is predicted, wherein the first feedback process is used to re-plan the driving path of the vehicle; performing collision detection according to the result of the first feedback process, and executing a second feedback process when the result of the collision detection is that a collision is predicted to occur, wherein the second feedback process is used to re-plan the travel speed of the vehicle; performing collision detection according to the result of the second feedback process, and executing the above iterative process, till an obstacle avoidance trajectory is planned for the vehicle, so that the vehicle can travel along the obstacle avoidance trajectory. The present disclosure can reduce the time required for trajectory planning during obstacle avoidance, improve the compatibility of the planning algorithm, and improve the response of the vehicle to the dynamic environment.

## Description

The present application is filed based on the Chinese patent application No. 202110638411.3 with filing date of June 8, 2021 and claims benefits from the priority of this Chinese Patent Application, the whole contents of which are incorporated herein as reference.

### Technical Field

The present disclosure relates to the technical field of unmanned driving, in particular to an obstacle avoidance method, an obstacle avoidance apparatus, an electronic device and a storage medium for a vehicle.

### Background Art

The motion planning technique for unmanned driving is one of the core techniques of unmanned vehicles, and usually may include path planning and speed planning. In addition, it is one of the common requirements for unmanned vehicles to avoid obstacles in the process of driving of the unmanned vehicles. Generally, there are special decision-making and planning methods in motion planning to make plan for the trajectory of a vehicle during obstacle avoidance.

In the prior art, since the conventional obstacle avoidance planning method for an unmanned vehicle usually only has to consider the information of obstacles and the path planning in the same operation cycle of motion planning, it doesn't predict collisions between the vehicle and obstacles in advance, and such a reactive obstacle avoidance method has a poor avoidance effect against dynamic obstacles; during obstacle avoidance treatment based on the path planning in the same operation cycle, often the planning algorithm has to be invoked repeatedly in the same operation cycle to make plan for the avoidance trajectory, resulting in extremely time-consuming planning for the avoidance trajectory and reduced the responsiveness of the vehicle to the dynamic environment.

In view of the prior art, it is desirable to provide an obstacle avoidance solution for a vehicle, which can realize avoidance from dynamic obstacles, reduce the time required for avoidance trajectory planning for the vehicle, and improve the responsiveness of the vehicle.

### Contents of the Invention

In view of the drawbacks in the prior art, an obstacle avoidance method, an obstacle avoidance apparatus, an electronic device and a storage medium are provided in the embodiments of the present disclosure, in order to solve the problems of poor avoidance effect against dynamic obstacles, extremely time-consuming vehicle trajectory planning for obstacle avoidance, and low response of the vehicle to the dynamic environment in the prior art.

In a first aspect of the embodiments of the present disclosure, an obstacle avoidance method for a vehicle is provided, comprising: performing collision detection on obstacles on a driving path of the vehicle, and executing a first feedback process if the result of the collision detection is that a collision is predicted to occur, wherein the first feedback process is used to re-plan the driving path of the vehicle; performing collision detection according to the result of the first feedback process, and executing a second feedback process when the result of the collision detection is that a collision is predicted to occur, wherein the second feedback process is used to re-plan the travel speed of the vehicle; performing collision detection according to the result of the second feedback process, and executing the above iterative process, till an obstacle avoidance trajectory is planned for the vehicle, so that the vehicle can travel along the obstacle avoidance trajectory.

In a second aspect of the embodiments of the present disclosure, an obstacle avoidance apparatus for a vehicle is provided, comprising: a first feedback processing module configured to perform collision detection on the obstacles on the driving path of the vehicle and execute a first feedback process if the result of the collision detection is that a collision is predicted to occur, wherein the first feedback process is used to re-plan the driving path of the vehicle; a second feedback processing module configured to perform collision detection according to the result of the first feedback process and execute a second feedback process if the result of collision detection is that a collision is predicted to occur, wherein the second feedback process is used to re-plan the travel speed of the vehicle; an iterative processing module configured perform collision detection according to the result of the second feedback process and execute the above iterative process, till an obstacle avoidance trajectory is planned for the vehicle, so that the vehicle can travel along the obstacle avoidance trajectory.

In a third aspect of the embodiments of the present disclosure, an electronic device is provided, comprising memory, a processor, and a computer program stored in the memory and executable on the processor, wherein the processor implements the steps of the method described above when it executes the computer program.

In a fourth aspect of the embodiments of the present disclosure, a computer readable storage medium is provided. The computer readable storage medium stores a computer program, which, when executed by a processor, implements the steps of the method described above.

The above at least one technical solution employed in the embodiments of the present disclosure can achieve the following beneficial effects:
Collision detection is performed for obstacles on a driving path of the vehicle, and a first feedback process is executed if the result of the collision detection is that a collision is predicted to occur, wherein the first feedback process is used to re-plan the driving path of the vehicle; collision detection is performed according to the result of the first feedback process, and a second feedback process is executed if the result of the collision detection is that a collision is predicted to occur, wherein the second feedback process is used to re-plan the travel speed of the vehicle; collision detection is performed according to the result of the second feedback process, and the above iterative process is executed till an obstacle avoidance trajectory is planned for the vehicle, so that the vehicle can travel along the obstacle avoidance trajectory. With the solution, the time required for planning an obstacle avoidance trajectory for a driverless vehicle can be reduced, and the compatibility of the planning algorithm can be improved, and, by iteration among different feedback processes, the responsiveness of the vehicle to the dynamic environment will not be reduced.

### IV. Brief Description of Drawings

To explain the technical solution in the embodiments of the present disclosure more clearly, hereunder the drawings to be used in the description of the embodiments or the prior art will be introduced briefly. Obviously, the drawings used in the description below only illustrate some embodiments of the present disclosure, and those skilled in the art can work out other drawings based on these drawings without expending any creative labor.
Fig. 1 is a schematic diagram of iterative optimization of the obstacle avoidance trajectory for dynamic obstacles in the related art;
Fig. 2 is a flow diagram of the obstacle avoidance method for a vehicle provided in an embodiment of the present disclosure;
Fig. 3 is a schematic diagram of the iterative process between before and after frames in an embodiment of the present disclosure;
Fig. 4 is a schematic diagram of the structure of the obstacle avoidance apparatus of the vehicle provided in an embodiment of the present disclosure; and
Fig. 5 is a schematic diagram of the structure of the electronic device provided in an embodiment of the present disclosure.

### V. Embodiments

In the following description, for the purpose of explanation rather than limitation, specific details, such as specific system structure and techniques, etc., are provided, in order to provide a thorough understanding on the embodiments of the present disclosure. However, those skilled in the art should clearly understand that the present disclosure can be realized in other embodiments without those specific details. In other circumstances, detailed description on well-known systems, devices, circuits and methods are omitted, so that unnecessary details do not interfere with the description of this disclosure.

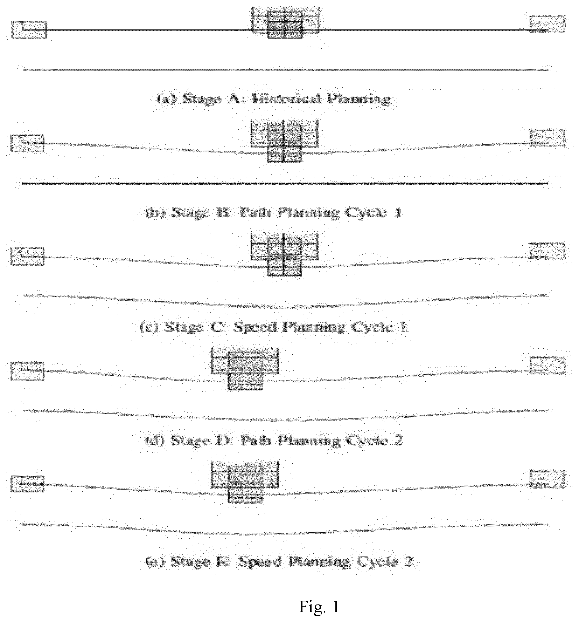

For the motion planning for unmanned driving, the vehicle must handle the surrounding obstacles constantly during the travel, including dynamic obstacles and static obstacles. For dynamic obstacles, it is necessary to predict the trajectories of the dynamic obstacles in the future (e.g., within 8 seconds), besides acquiring the information of the dynamic obstacles. Dynamic obstacles with predicted trajectories must be handled with a special decision-making and planning algorithm. At present, in the prior art, for dynamic obstacles with predicted trajectories, a mainstream algorithm is to use an Expectation-Maximization algorithm to optimize the trajectory for obstacle avoidance. Hereunder the iterative optimization process will be described in detail with reference to the accompany drawings, as shown in Fig. 1, which shows a schematic diagram of iterative optimization of the obstacle avoidance trajectory for dynamic obstacles in the related art. The iterative optimization process can include the following steps:
a) On the basis of the path planning after the end of the previous frame (i.e., Stage A: Historical Planning in Fig. 1), perform collision detection on the dynamic obstacles detected in the current frame (the following steps b-e are operations accomplished in the same frame), and enter a first path iteration cycle (i.e., Stage B: Path Planning Cycle 1) if the result of the collision detection is that a collision will happen;
b) After the first path iteration, the driverless vehicle will avoid the obstacle at the location of collision, and enter a first speed iteration cycle (i.e., Stage C: Speed Planning Cycle 1);
c) After the first speed iteration, the driverless vehicle will decelerate when approaching the vicinity of the obstacle, and enter a second path iteration cycle (i.e., Stage D: Path Planning Cycle 2);
d) After the second path iteration, the driverless vehicle will perform collision detection according to the newly planned path and speed so as to update a detour trajectory, and enter a second speed iteration cycle (i.e., Stage E: Speed Planning Cycle 2);
e) After the second speed iteration, the driverless vehicle will travel along the original path trajectory and decelerate at the latest iterated speed when approaching the vicinity of the obstacle, so as to attain the purpose of planning a detour deceleration trajectory.

It can be seen from the above technical solution: in the method of iterative optimization for obstacle avoidance trajectory in the related art, path iteration and speed iteration are performed repeatedly in the same frame, i.e., a path planning algorithm and a speed planning algorithm are invoked repeatedly to attain the purpose of planning an obstacle avoidance trajectory. However, in the current mainstream planning algorithms, it takes 50-100ms to invoke the path planning algorithm and the speed planning algorithm once; while it is required that the total time consumption of the motion planning module in an automatic driving system should not exceed 100ms, in order to meet the requirement for real-time planning and obstacle avoidance. Therefore, the method that invokes path iteration and speed iteration repeatedly in the same frame can't meet the time consumption requirement for the motion planning module, and results in excessive time consumption for trajectory planning during obstacle avoidance.

In addition, since the planning algorithms have to be invoked repeatedly in the same frame for iteration, it is necessary to use the same type of planning algorithms, otherwise the accuracy of the iteration process and iteration result will be affected directly. However, in actual automatic driving systems, when the motion planning module performs iterations for path planning, it often invokes different types of planning algorithms on demand. Obviously, such an iterative method for obstacle avoidance trajectory degrades the compatibility of the algorithms, and can't adapt to different types of planning algorithms in the same iteration process. Therefore, the generalization of the algorithms is poor.

It should be noted that the "frame" mentioned in the embodiments of the present disclosure is not an image frame in the conventional sense. In the motion planning of a driverless vehicle, a frame may be regarded as a complete cyclic processing process, the frame is considered as a complete running cycle (or called an operation cycle) or a complete response cycle. Hereunder the concept of a frame will be explained in an example. For example, a motion planning module receives the obstacle information input from an upstream device such as a radar or camera, processes the obstacle information, and sends the processed obstacle information to the control module, and the control module realizes the control process of the steering wheel or throttle, which may be regarded as a frame.

Hereunder the elements in Fig. 1 will be explained in conjunction with the above description of the related technical solution:
In each step shown in Fig. 1, the rectangular block located at the top represents a dynamic obstacle, and the rectangular block located at the bottom represents a driverless vehicle. In Fig. 1, s=40 indicates that the driverless vehicle will collide with a dynamic obstacle at 40m ahead, and the curve of the rectangular block located at the bottom represents the movement trajectory of the driverless vehicle. Correspondingly, the dynamic obstacle also has its own movement trajectory.

In the embodiments of the present disclosure, based on the idea of employing an Expectation-Maximization algorithm for iterative optimization, the planning algorithms in the same frame are distributed among different frames, i.e., the iterative process in the same frame is distributed among different frames, and the planning algorithm is executed only once in each frame. Thus, the problem of excessive time consumption incurred by repeatedly invoking the path planning algorithm and the speed planning algorithm in the same frame is avoided, and the time consumption of planning an obstacle avoidance trajectory is greatly reduced. Since the method of iteration across frames before and after is adopted, the solution does not affect the planning algorithm used during the switching between the before frame and the after frame, thus different types of planning algorithms can be used for iteration between the before and after frames, thereby the compatibility and generalization of the algorithms are improved.

The Expectation-Maximization (EM) algorithm is an optimization algorithm that performs extreme likelihood estimation by iterations. The standard calculation framework of the EM algorithm consists of Expectation steps and Maximization steps arranged alternately, and the convergence of the algorithm can ensure that the iterations at least approximate a local maximum value.

Wherein, the extreme likelihood estimation, also known as the most probable eatimation or maximum likelihood estimation, is a method of estimation, which, generally speaking, is to use known information of sample outcomes to reversely deduce the parameter values of a model that are most likely (with maximum probability) to lead to these sample outcomes.

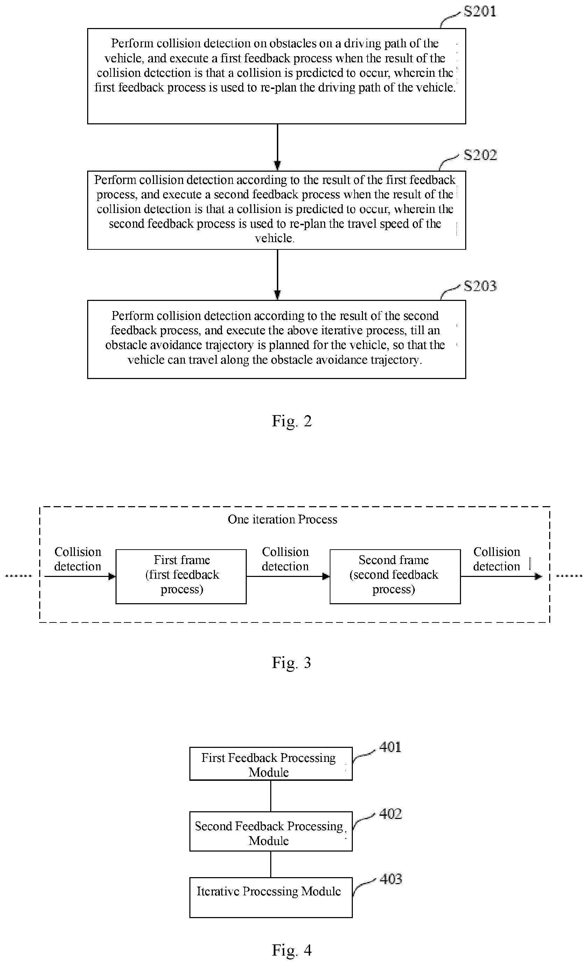

Fig. 2 is a flow diagram of the obstacle avoidance method for a vehicle provided in an embodiment of the present disclosure. The method of obstacle avoidance for a vehicle in Fig. 2 can be executed by an electronic device in an automatic driving system. Specifically, the method may comprise the following steps S201 to S203:
In step S201, performing collision detection on obstacles on a driving path of the vehicle, and executing a first feedback process when the detection result is that a collision is predicted to occur, wherein the first feedback process is used to re-plan the driving path of the vehicle.

In the embodiments of the present disclosure, the concept of "frame" is replaced by a feedback process. In the motion planning of a driverless vehicle, a frame may be understood as the operation of a feedback process. Therefore, the first feedback process in the following embodiments may also be referred to as a first frame, and the second feedback process may also be referred to as a second frame. The feedback process may be considered as a complete planning response process with a certain time period (e.g., 100ms). The feedback process includes operation cycles of planning algorithms, and the feedback process in the automatic driving system is a continuous cyclic process . Of course, the above-mentioned concept of "frame" may also be replaced by other terms, such as operation cycle, computation cycle, response cycle, etc. Such a replacement of terms does not constitute any limitation to this solution.

In some embodiments, the obstacles are dynamic obstacles, and performing collision detection on the obstacles on the driving path of the vehicle, the collision detection comprises:
determining an initial planned path and an initial planned speed of the vehicle according to historical motion planning for the vehicle, and acquiring obstacle information; using the obstacle information, the initial planned path and the initial planned speed as parameters, and processing with a collision detection algorithm to obtain an initial collision location.

Specifically, the obstacles in the embodiments of the present disclosure are dynamic obstacles with predicted trajectories. In actual applications, the obstacles ahead can be detected by a lidar installed on the driverless vehicle, and whether an obstacle is a dynamic obstacle can be judged by calculating the speed of the obstacle. In addition, whether an obstacle is a dynamic obstacle may also be judged by 3D obstacle point cloud images. For example, the 3D obstacle point cloud images of the before and after frames are compared; In the overlapping area of the 3D obstacle point cloud images of the previous frame and the current frame, if the point cloud existing in the previous frame also exists in the current frame, it can be deemed that the obstacle is at the same position in these two frames (i.e., in a static state), otherwise the obstacle is judged as a dynamic obstacle.

Hereunder the collision detection process for an obstacle will be explained in conjunction with specific embodiments, which may specifically include the following contents:
when a collision detection algorithm is used for collision detection, an initial planned path and an initial planned speed of the vehicle are acquired from historical motion planning, the historical motion planning may be regarded as the planned path and speed outputted from the previous feedback process; the rectangular movement trajectory of the vehicle on the planned path can be calculated according to the planned path, speed, size, and heading information of the vehicle; in addition, by acquiring the information of a dynamic obstacle, such as the length, width, center point coordinates, heading, speed and predicted trajectory of the obstacle, the rectangular movement trajectory corresponding to the dynamic obstacle can also be calculated according to the information of the dynamic obstacles, and the location of collision between the vehicle and the dynamic obstacle can be predicted by performing collision detection between the rectangular movement trajectory of the vehicle and the rectangular movement trajectory of the dynamic obstacle.

In some embodiments, performing the first feedback process comprises:
acquiring obstacle information corresponding to the moment when the first feedback process is executed, using the initial planned path, the initial planned speed, the obstacle information corresponding to the first feedback process, the initial collision location, and current location and speed information of the vehicle as parameters, and re-planning the path of the vehicle with a preset path planning algorithm.

Specifically, since the feedback process is an operation performed in a period of time, the moment of the first feedback process which can also be called the first frame can be regarded as the starting moment when the motion planning module executes the next frame (here the next frame is regarded as the first frame) after it completes the processing of the previous frame; the obstacle information corresponding to that moment is acquired, and is regarded as the obstacle information corresponding to the first feedback process in the following embodiments.

Furthermore, in the first feedback process, the obtained initial planned path, initial planned speed, obstacle information corresponding to the first feedback process, initial collision location, and the current location and speed information of the vehicle are used as the inputs for the path planning algorithm. In actual applications, the path planning algorithm used in the stage of the first feedback process may employ a lattice planner algorithm.

Here, the lattice planner algorithm is one of the path planning algorithms in automatic driving, and the lattice planner algorithm belongs to the planning module, the planning module is an important connecting link module in Apollo. The planning module uses the results from a prediction module, a routing module, and a high-precision map and positioning as inputs, and outputs a stable, comfortable and safe trajectory by means of the algorithm to a control module for execution. The lattice planner algorithm follows a logic of sampling before selection, and guarantees the smoothness of the trajectory with a cost function abstracted from safety, comfort and traffic regulations.

According to the technical solution provided in the embodiment of the present disclosure, when planning an obstacle avoidance trajectory of a driverless vehicle, not only the information of the dynamic obstacle is considered, but also the collision detection of the dynamic obstacle is performmed based on the planning result of the previous frame to determine the collision location; in addition, the initial planned path and the initial planned speed obtained from the historical motion planning are also be combined, and these information are used toghether as the input of path planning to realize the re-planning of the vehicle path. Since multidimensional information obtained from the before and after frames, the vehicle and the obstacles is combined when performing path planning for the vehicle obstacle avoidance, the effect of path planning is improved, and the path planning is more reasonable.

In the embodiment of the present disclosure, by performing the operation in step S201, the obstacle avoidance path of the vehicle can be re-planned according to the historical planning result. Owing to the fact that the result of the path planning can only represent the path that the vehicle travels along while avoiding the obstacle, the speed of the vehicle must also be planned in order to enable the vehicle to avoid the obstacle along a reasonable trajectory. Hereunder the process of speed planning will be described in conjunction with embodiments.

In step S202, performing collision detection according to the result of the first feedback process, and executing a second feedback process when the detection result is that a collision is predicted to occur, wherein the second feedback process is used to re-plan the travel speed of the vehicle.

In some embodiments, performing collision detection according to the result of the first feedback process comprises:
acquiring the obstacle information after executing the first feedback process, using the obstacle information after the first feedback process, the planned path and the planned speed as parameters, and processing with the collision detection algorithm to obtain a collision location corresponding to a second feedback process.

Specifically, after executing the first feedback process (i.e., the first frame or the first path planning), the motion planning module will obtain the replanned path of the first frame and the initial planned speed of the vehicle. In order to enable the vehicle to slow down and give way near the obstacle, it is necessary to execute a second feedback process (i.e., a second frame or second speed planning) according to the result of the first feedback process. Before executing the processing of the second frame, the collision between the vehicle and the obstacle needs to be detected again.

In actual applications, the method for collision detection in step S202 is essentially the same as the process of obstacle collision detection in the preceding embodiment. Therefore, the detailed process of collision detection will not be described here.

Furthermore, in some embodiments, performing the second feedback process comprises:
acquiring the obstacle information corresponding to the moment when the second feedback process is executed, using the planned path after the first feedback process, the planned speed, the obstacle information corresponding to the second feedback process, the collision location corresponding to the second feedback process and the current position and speed information of the vehicle as parameters, and re-planning the speed of the vehicle with a preset speed planning algorithm.

Specifically, the obstacle information corresponding to the moment when the second feedback process is executed may be considered as the obstacle information acquired at the moment the motion planning module starts to execute the next frame (i.e., the second frame) after completing the processing of the first frame (i.e., the first feedback process), i.e., the obstacle information corresponding to the second feedback process.

In the second feedback process, the obtained planned path, planned speed, obstacle information of the first frame, initial collision location, and current location and speed information of the vehicle after the processing of the first frame are used as inputs of the speed planning algorithm. In actual applications, the speed planning algorithm used in the stage of the second feedback process may employ a Piecewise Jerk Path Optimization algorithm, which is referred to as a piecewise jerk planner algorithm for short.

Here, the inputs for the piecewise jerk planner algorithm consist of the following four parts:
1. A smooth road guide line for motion decomposition in a Frenet coordinate system;
2. Motion state of the current driverless vehicle, including location, orientation, instant steering, speed and acceleration, the motion state will be decomposed according to the smooth guide line;
3. Information of static obstacles in the environment, projected on the guide line;
4. Attributes of the vehicle and kinematic model, etc. for calculating reasonable variable constraints in the optimization process.

The output of the piecewise jerk planner algorithm is a smooth driving path with continuous curvature. The optimization goal of the algorithm is to reduce the zero-order, first-order, second-order and third-order derivatives of lateral displacement, to make the path as close to the guide line as possible while ensuring comfort.

According to the technical solution provided in the embodiment of the present disclosure, by deploying path planning and speed planning respectively between the before frame and the after frame, and the planning algorithm is executed only once in each frame. Thus the problem of increased time consumption incurred by repeatedly invoking the planning algorithm in the same frame is avoided, and the time consumption of iteration of the planning algorithm is reduced.

In step S203, performing collision detection according to the result of the second feedback process, and executing the above iterative process till an obstacle avoidance trajectory is planned for the vehicle, so that the vehicle can travel along the obstacle avoidance trajectory.

In some embodiments, performing collision detection according to the result of the second feedback process comprises:
acquiring the obstacle information after executing the second feedback process, using the obstacle information after the second feedback process, the planned path and the planned speed as parameters, and processing with the collision detection algorithm to obtain a collision location corresponding to the next feedback process.

Specifically, after the second feedback process (i.e., the second frame or the second speed planning) is executed, the motion planning module will obtain the replanned speed in the second frame and the planned path in the first frame. It should be noted that since the planning in the second frame is speed planning and no new path planning is generated. Therefore, when the collision detection is performed according to the planned result in the second frame, the path based on is still the result of the path planning in the first frame.

In actual applications, the method for collision detection in step S203 is essentially the same as the process of obstacle collision detection in the preceding embodiment. Therefore, the detailed process of collision detection will not be described here.

Hereunder the framework of the algorithm for iteration between the before and after frames in the embodiment of the present disclosure will be explained with reference to the accompany drawings. Please see Fig. 3, which shows a schematic diagram of the iteration process between the before and after frames in an embodiment of the present disclosure; the iterative process mainly includes the following content:
The first frame (i.e., the first feedback process) obtains the speed planning and path planning outputted from the previous frame; before path planning is performed in the first frame, obstacle collision detection is performed, and then the obstacle avoidance path of the vehicle is replanned with the path planning algorithm.

The second frame (i.e., the second feedback process) obtains the re-planned path outputted from the first frame and the speed planning outputted from the previous frame; before speed planning is performed in the second frame, obstacle collision detection is performed, and then the speed of the vehicle approaching the obstacle during obstacle avoidance is replanned with the speed planning algorithm.

It can be seen that the first feedback process and the second feedback process correspond to two successive operation cycles in the motion planning respectively. Therefore, the above process may be regarded as an iterative process. By continuously executing the above iterative process between the before and after frames, to make the path planning and speed planning gradually converged till a reasonable detour deceleration trajectory is planned. Wherein, the path may be regarded as a sequence of planned coordinate points. For example, a series of coordinate points are planned, the coordinate points containing information such as x, y coordinates, heading, curvature, etc. the coordinate points of the path are sent to the vehicle control module to control the vechile to travel along the coordinate points, and the trajectory is obtained by superimposing the speed acceleration on the coordinate points of the path.

It should be noted that the path planning algorithm and speed planning algorithm used in the iterative process in the embodiments of the present disclosure may be different types of planning algorithms. Specifically, besides the lattice planner algorithm and the piecewise jerk planner algorithm in the preceding embodiments, an RRT* algorithm may also be used, for example, the RRT* algorithm may be used in the first frame for path planning.

In the embodiments of the present disclosure, the vehicles include, but are not limited to, the following types of vehicles: automatic driving vehicles, driverless vehicles and intelligent driving vehicles.

The iterative process in the above embodiments of the present disclosure is in terms of two successive frames as an iterative cycle. However, in actual applications, three successive frames may also be used as an iterative process, for example, path planning is performed in the first frame, speed planning is performed in the second frame, and path planning is performed in the third frame; it should be understood that other successive frames are also applicable, and the number of frames included in an iteration cycle (i.e., the number of times of execution of the planning algorithm) does not constitute a limitation to the solution.

According to the technical solution provided in the embodiment of the present disclosure, when iteration is carried out for path and speed in the motion planning with the Expectation-Maximization algorithm, an algorithm framework of iteration between the before and after frames is employed, and the planning algorithm needs to be executed only once in each frame. Therefore, the time consumption of iteration for motion planning during obstacle avoidance is greatly reduced; since a method of iteration between the before and after frames is employed, it does not affect the switching of different types of planning algorithms between the before and after frames, and the solution is compatible with various planning algorithms, thus the compatibility and expansibility of the planning algorithms are improved; moreover, the responsiveness of the vehicle to the dynamic environment will not be reduced by cross-frame iteration, and the performance in field tests of the vehicle is excellent and the time consumption meets the requirement.

Hereunder are apparatus embodiments of the present disclosure, which can be used to execute the method embodiments of the present disclosure. For details not disclosed in the apparatus embodiments, please refere to the method embodiments of the present disclosure.

Fig. 4 is a structural schematic diagram of the obstacle avoidance apparatus for a vehicle provided in an embodiment of the present disclosure. As shown in Fig. 4, the obstacle avoidance apparatus for a vehicle comprises:
a first feedback processing module 401 configured to perform collision detection on the obstacles on the driving path of the vehicle and execute a first feedback process when the detection result is that a collision is predicted to occur, wherein the first feedback process is used to re-plan the driving path of the vehicle;
a second feedback processing module 402 configured to perform collision detection according to the result of the first feedback process and execute a second feedback process when the detection result is that a collision is predicted to occur, wherein the second feedback process is used to re-plan the travel speed of the vehicle;
an iterative processing module 403 configured perform collision detection according to the result of the second feedback process and execute the above iterative process, till an obstacle avoidance trajectory is planned for the vehicle, so that the vehicle can travel along the obstacle avoidance trajectory.

In some embodiments, the obstacles are dynamic obstacles, and the first feedback processing module 401 in Fig. 4 determines an initial planned path and an initial planned speed of the vehicle according to the historical motion planning of the vehicle, and obtains obstacle information; and
uses the obstacle information, the initial planned path and the initial planned speed as parameters, and processes with a collision detection algorithm to obtain an initial collision location.

In some embodiments, the first feedback processing module 401 in Fig. 4 acquires obstacle information corresponding to the moment when the first feedback process is executed, uses the initial planned path, the initial planned speed, the obstacle information corresponding to the first feedback process, the initial collision location, and current location and speed information of the vehicle as parameters, and re-plan the path of the vehicle with a preset path planning algorithm.

In some embodiments, the second feedback processing module 402 in Fig. 4 acquires the obstacle information corresponding to the moment when the second feedback process is executed, uses the planned path after the first feedback process, the planned speed, the obstacle information corresponding to the second feedback process, the collision location corresponding to the second feedback process and the current position and speed information of the vehicle as parameters, and re-plan the speed of the vehicle with a preset speed planning algorithm.

In some embodiments, the iteration processing module 403 in Fig. 4 acquires the obstacle information after executing the second feedback process, uses the obstacle information after the second feedback process, the planned path and the planned speed as parameters, and processing with the collision detection algorithm to obtain a collision location corresponding to the next feedback process.

In some embodiments, the first feedback process and the second feedback process correspond to two successive operation cycles in the motion planning respectively.

The path planning algorithm and the speed planning algorithm used in the iterative process are different types of planning algorithms.

It should be understood that the sequence numbers of the steps in the above embodiment don't means the order of execution; instead, the order of execution of the processes shall be determined according to the function and internal logic. The sequence numbers shall not be deemed as constituting any limitation to the implementation process of the embodiments of the present disclosure.

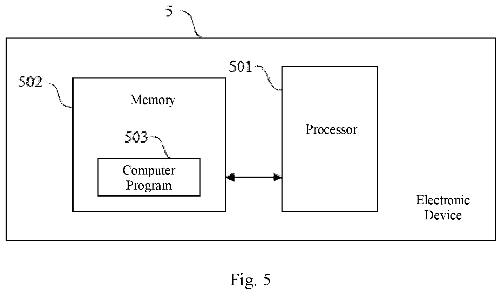

Fig. 5 is a schematic diagram of the structure of the electronic device 5 provided in an embodiment of the present disclosure. As shown in Fig. 5, the electronic device 5 in this embodiment comprises a processor 501, memory 502, and a computer program 503 stored in the memory 502 and executable on the processor 501. The processor 501 implements the steps in the above-mentioned method embodiments when it executes the computer program 503; alternatively, the processor 501 implements the functions of the modules/units in the above-mentioned device embodiments when it executes the computer program 503.

For example, the computer program 503 may be divided into one or more modules/units, one or more modules/units are stored in the memory 502 and executed by the processor 501 to implement the present disclosure. Said one or more modules/units may be a series of computer program instruction segments capable of performing specific functions, the instruction segments are used to describe the execution process of the computer program 503 in the electronic device 5.

The electronic device 5 may be a desktop computer, a laptop computer, a PDA, or a cloud server, etc. The electronic device 5 may include, but is not limited to, a processor 501 and memory 502. Those skilled in the art can easily understand that Fig. 5 only shows an example of the electronic device 5, and does not constitute any limitation to the electronic device 5. The electronic device may include more or less components than those shown in Fig.5, or a combination of some components, or different components. For example, the electronic device may further include input and output devices, network access devices, and bus, etc.

The processor 501 may be a Central Processing Unit (CPU) or other general-purpose processor, Digital Signal Processor (DSP), Application Specific Integrated Circuit (ASIC), Field-Programmable Gate Array (FPGA) or other programmable logic devices, discrete gates or transistor logic devices, discrete hardware components, etc. A general-purpose processor may be a microprocessor or any conventional processor, etc.

The memory 502 may be an internal storage unit of the electronic device 5, such as a hard disk or internal memory of the electronic device 5. Alternatively, the memory 502 may be an external storage device of the electronic device 5, such as a plug-in hard disk, a Smart Media Card (SMC), a Secure Digital (SD) card, a Flash Card, etc. provided on the electronic device 5. Furthermore, the memory 502 may include an internal storage unit and an external storage device of the electronic device 5. The memory 502 is used to store computer programs and other programs and data required by the electronic device. The memory 502 may also be used to temporarily store data that has been outputted or will be outputted.

Those skilled in the art can clearly understand: for the convenience and conciseness of description, only the division of the above-mentioned functional units and modules is used for illustration. In actual applications, the above-mentioned functional allocation may be realized by means of different functional units and modules according to the requirement, which is to say, the internal structure of the device may be divided into different functional units or modules to realize all or part of the above-mentioned functions. The functional units and modules in the embodiments may be integrated in one processing unit or exist as separate units and modules physically, or two or more units may be integrated in one unit, and the integrated units may be realized in the form of hardware or software functional units. In addition, the specific names of the functional units and modules are only for a distinguishing purpose, but are not intended to limit the scope of protection of the present application. For the specific working processes of the units and modules in the above-mentioned system, reference may be made to the corresponding processes in the above method embodiment, and will not be described here.

In the above embodiments, the description of each embodiment has its own emphasis. For the parts not detailed or mentioned in one embodiment, reference may be made to the related description of other embodiments.

Those skilled in the art can realize that the units and algorithm steps of each example described in connection with the embodiments disclosed herein can be implemented by electronic hardware or a combination of computer software and electronic hardware. Whether the functions are implemented by hardware or software depends on the specific application and design constraints of the technical solution. Those skilled in the art can use different methods to implement the described functions for each specific application, but the implementation shall not be deemed as being beyond the scope of the present disclosure.

It should be understood that the apparatus/computer device and method disclosed in the embodiments of the present disclosure may be implemented in other ways. For example, the embodiments of the apparatus/computer device described above are only for illustrative. For example, the division of the modules or units is only a logic function division, and may be divided in other ways in the actual implementation. For example, a plurality of units or components may be combined or integrated into another system, or some features may be neglected or not implemented. Besides, the illustrated or discussed coupling or direct coupling or communication connection may be implemented via some interfaces, and the indirect coupling or communication connection of the devices or units may be electrical, mechanical, or in other forms.

The units that are described as separate components may be or not be separated physically, and the components illustrated as units may be or not be physical units, i.e., they may be located at one place or distribute to a plurality of network elements. A part of or all of the units may be selected according to the actual requirement to realize the solution of the embodiments.

In addition, the functional units in the embodiments of the present disclosure may be integrated in one processing unit or exist as physically separate units, and two or more units may be integrated in one unit. The above-mentioned integrated units may be implemented in the form of hardware or software functional units.

The integrated modules/units may be stored in a computer readable storage medium if they are implemented in the form of software functional units and sold or used as separate products. Based on that understanding, all or some of the processes in the method in the above embodiments of the present disclosure may also be accomplished by instructing related hardware through a computer program, which can be stored in a computer-readable storage medium, and, when the computer program is executed by a processor, it can implement the steps of the above method embodiments. The computer program may include computer program codes, the computer program codes may be in the form of source code, object code, executable file or an intermediate form, etc. The computer readable medium may include any entity or device capable of carrying computer program codes, recording medium, U-disk, removable hard disk, magnetic disk, optical disk, computer memory, Read-Only Memory (ROM), Random Access Memory (RAM), electrical carrier signals, telecommunication signals, and software distribution medium, etc. It should be noted that the content contained in computer-readable medium may be appropriately increased or decreased according to the requirements of legislation and patent practice in jurisdiction. For example, in some jurisdictions, according to the legislation and patent practice, the computer-readable medium does not include electrical carrier signals and telecommunication signals.

The above embodiments are provided only to interpret and illustrate the technical solution of the present disclosure, and don't constitute any limitation to the present disclosure; while the present disclosure is described in detail above in some embodiments, those skilled in the art should understand that modifications may be made to the technical solution described in the above embodiments or equivalent replacements may be made to some of the technical features therein; those modifications or replacements can not make the essence of the corresponding technical solution deviate from the spirit and scope of the technical solution in the embodiments of the present disclosure, and should be deemed as falling in the scope of protection of the present disclosure.

## Claims

1. An obstacle avoidance method for a vehicle, **characterized in that**, comprising:
performing collision detection on obstacles on a driving path of the vehicle, and executing a first feedback process when the result of the collision detection is that a collision is predicted to occur, wherein the first feedback process is used to re-plan the driving path of the vehicle;
performing collision detection according to the result of the first feedback process, and executing a second feedback process when the result of the collision detection is that a collision is predicted to occur, wherein the second feedback process is used to re-plan the travel speed of the vehicle;
performing collision detection according to the result of the second feedback process, and executing the above iterative process, till an obstacle avoidance trajectory is planned for the vehicle, so that the vehicle can travel along the obstacle avoidance trajectory.

2. The method according to claim 1, wherein the obstacles are dynamic obstacles, and the collision detection on the obstacles on the driving path of the vehicle comprises:
determining an initial planned path and an initial planned speed of the vehicle according to historical motion planning for the vehicle, and acquiring obstacle information;
using the obstacle information, the initial planned path and the initial planned speed as parameters, and processing with a collision detection algorithm to obtain an initial collision location.

3. The method according to claim 2, wherein executing the first feedback process comprises:
acquiring obstacle information corresponding to the moment when the first feedback process is executed, using the initial planned path, the initial planned speed, the obstacle information corresponding to the first feedback process, the initial collision location, and current location and speed information of the vehicle as parameters, and re-planning the path of the vehicle with a preset path planning algorithm.

4. The method according to claim 3, wherein performing collision detection according to the result of the first feedback process comprises:
acquiring the obstacle information after executing the first feedback process, using the obstacle information after the first feedback process, the planned path and the planned speed as parameters, and processing with the collision detection algorithm to obtain a collision location corresponding to the second feedback process.

5. The method according to claim 4, wherein executing the second feedback process comprises:
acquiring the obstacle information corresponding to the moment when the second feedback process is executed, using the planned path after the first feedback process, the planned speed, the obstacle information corresponding to the second feedback process, the collision location corresponding to the second feedback process and the current position and speed information of the vehicle as parameters, and re-planning the speed of the vehicle with a preset speed planning algorithm.

6. The method according to claim 5, wherein performing collision detection according to the result of the second feedback process comprises:
acquiring the obstacle information after executing the second feedback process, using the obstacle information after the second feedback process, the planned path and the planned speed as parameters, and processing with the collision detection algorithm to obtain a collision location corresponding to the next feedback process.

7. The method of according to any of claims 1-6, wherein the first feedback process and the second feedback process correspond to two successive operation cycles in the motion planning respectively;
the path planning algorithm and the speed planning algorithm used in the iterative process are different types of planning algorithms.

8. An obstacle avoidance apparatus for a vehicle, **characterized in that**, comprising:
a first feedback processing module configured to perform collision detection on the obstacles on the driving path of the vehicle and execute a first feedback process when the result of the collision detection is that a collision is predicted to occur, wherein the first feedback process is used to re-plan the driving path of the vehicle;
a second feedback processing module configured to perform collision detection according to the result of the first feedback process and execute a second feedback process when the result of collision detection is that a collision is predicted to occur, wherein the second feedback process is used to re-plan the travel speed of the vehicle;
an iterative processing module configured to perform collision detection according to the result of the second feedback process and execute the above iterative process, till an obstacle avoidance trajectory is planned for the vehicle, so that the vehicle can travel along the obstacle avoidance trajectory.

9. An electronic device, comprising memory, a processor, and a computer program stored in the memory and executable on the processor, wherein the processor implements the method of any of claims 1-7 when it executes the computer program.

10. A computer-readable storage medium storing a computer program, which, when executed by a processor, implements the method of any of claims 1-7.
